# EUROPEAN PATENT SPECIFICATION

(11) **EP 1 555 254 B1**
(45) Date of publication and mention of the grant of the patent: **03.03.2010**
(21) Application number: 03754210.7
(22) Date of filing: 21.10.2003
(51) Int. Cl.: C04B 38/06, B01D 39/20, B01J 35/04

(54) **METHOD FOR MANUFACTURING POROUS HONEYCOMB STRUCTURE AND HONEYCOMB BODY**
VERFAHREN ZUR HERSTELLUNG VON PORÖSER WABENSTRUKTUR UND WABENKÖRPER
FABRICATION D'UNE STRUCTURE POREUSE EN NID D'ABEILLE ET STRUCTURE EN NID D'ABEILLE.

(30) Priority: 23.10.2002 JP 2002308067
(43) Date of publication of application: 20.07.2005
(73) Proprietor: NGK INSULATORS, LTD., Nagoya-City, Aichi Pref. 467-8530 (JP)
(72) Inventor: UCHIDA, Yasushi, c/o NGK INSULATORS, LTD., Nagoya-shi, Aichi 467-8530 (JP); OTSUKA, Aiko, c/o NGK INSULATORS, LTD., Nagoya-shi, Aichi 467-8530 (JP); ICHIKAWA, Shuichi, c/o NGK INSULATORS, LTD., Nagoya-shi, Aichi 467-8530 (JP)
(74) Representative: Paget, Hugh Charles Edward
(86) International application number: PCT/JP2003/013429
(87) International publication number: WO 2004/037745

(56) References cited:
- EP-A- 0 948 996
- EP-A1- 1 170 270
- EP-A1- 1 374 969
- EP-A2- 0 776 696
- WO-A-01/16049
- WO-A1-00/34202
- WO-A1-00/34202
- WO-A1-00/76939
- DE-A1- 3 738 916
- JP-A- 57 119 842
- JP-A- 2000 302 540
- JP-A- 2002 301 323
- US-A- 4 631 268

## Description

### Technical Field

The present invention relates to a method of manufacturing a porous honeycomb structure preferably for use as a filter for collecting soot, and a honeycomb formed body, particularly to a method of manufacturing a porous honeycomb structure, capable of effectively preventing a situation in which the porous honeycomb structure is cracked or collapsed because of its own weight in manufacturing the porous honeycomb structure having a high porosity, and a honeycomb formed body.

### Background Art

A porous honeycomb structure formed of a ceramic superior in resistance to heat or corrosion has been used as a filter for collecting soot, for use in applications such as environmental measures for preventing pollution and the like and product recovery from a high-temperature gas in various fields including chemistry, electric power, iron and steel, and industrial waste disposal. For example, the porous honeycomb structure formed of a ceramic has been preferably used as a filter for collecting the soot, for use in a high-temperature corrosive gas atmosphere, such as a diesel particulate filter (DPF) which collects particulates discharged from a diesel engine.

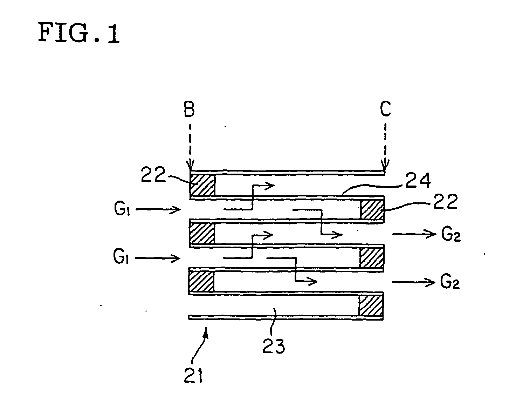

Examples of the soot collecting filter using the porous honeycomb structure include a structure in which, for example, as shown in FIG. 1, an inlet-side end face B and an outlet-side end face C of a plurality of cells 23 of a porous honeycomb structure 21 are alternately plugged by plugging portions 22. According to the porous honeycomb structure structured in this manner, when a gas G₁ to be treated is introduced into cell 23 from the inlet-side end face B, the particulates are captured by partition walls 24. On the other hand, a treated gas G₂ which has flown into the adjacent cell 23 through the porous partition wall 24 is discharged from the outlet-side end face C. Therefore, the treated gas G₂ from which the particulates in the gas G₁ to be treated have been separated can be obtained.

Especially, in recent years, since a treatment capability of the soot collecting filter needs to be enhanced, there has been a demand for a high-porosity porous honeycomb structure having a small pressure loss among the above-described porous honeycomb structures. As a method of manufacturing such high-porosity porous honeycomb structure, a method of manufacturing a porous honeycomb filter has been described in which a cordierite material, water, additionally a binder (organic binder such as methyl cellulose, a pore former (organic material such as graphite) and the like are kneaded, and a plasticized plastic material (equivalent to formable material, or "clay" mentioned in the present description) is formed, dried, and fired (see, e.g., Japanese Patent Application Laid-Open No. 2002-219319). According to the manufacturing method, since the binder or the pore former is burnt down to thereby form pores in firing a formed body, the high-porosity porous honeycomb structure can be obtained.

However, in the above-described manufacturing method, when a large amount of binder and pore former are contained in the clay for a purpose of manufacturing a higher-porosity porous honeycomb structure, the porous honeycomb structure is cracked during the firing of the formed body, and in an extreme case, there has been a problem that the porous honeycomb structure collapses by its own weight.

WO 00/34202 and WO 01/16049 describe the use of colloidal silica as one of the components of a ceramic composition which is formed by extrusion into a honeycomb shape and fired under conditions such that cordierite is formed by reaction as the primary phase of the fired honeycomb.

### Disclosure of the Invention

The present invention has been developed in consideration of the above-described problems of the conventional techniques, and an object thereof is to provide a method of manufacturing a porous honeycomb structure, capable of effectively preventing a situation in which the porous honeycomb structure is cracked or collapsed by its own weight in firing a formed body, and a honeycomb formed body.

As a result of intensive studies to solve the above-described problems, the present inventor has found that the above-described object can be achieved, when colloidal particles are contained in clay for use in the forming, and has completed the present invention. That is, according to the present invention, there are provided the following method of manufacturing a porous honeycomb structure as set out in claim 1, and honeycomb formed body as set out in claim 3.

Preferably the formable material contains an alkali metal source corresponding to 0.01 to 10 parts by mass of an alkali metal in terms of the alkali metal with respect to 100 parts by mass of the aggregate particle material.

### Brief Description of the Drawings

FIG. 1 is a schematic diagram showing an example of a filter for collecting soot, using a porous honeycomb structure;
FIG. 2 is a schematic diagram showing a "honeycomb shape" by an example of the porous honeycomb structure; and
FIG. 3 is a schematic diagram showing a method of evaluating strength of a calcined body.

### Best Mode for Carrying out the Invention

A best mode for carrying out a method of manufacturing a porous honeycomb structure of the present invention will be described concretely hereinafter.

To develop the method of manufacturing the porous honeycomb structure of the present invention, the present inventor has first studied reasons why the porous honeycomb structure is cracked or collapsed by its own weight in firing a formed body. As a result, it has been considered as a first reason that when the formed body is fired, a large amount of binder and pore former burn and generate heat, accordingly temperature of the formed body being fired rapidly rises, and a large thermal stress is generated. As a second reason, the binder contained in the clay is gelled, and functions as a reinforcing agent to maintain a mechanical strength of the formed body in the formed body before fired. However, during the firing of the formed body, the binder which has functioned as the reinforcing agent is burnt down, and a phenomenon occurs in which the mechanical strength of the formed body being fired rapidly drops. Moreover, as a third reason, this phenomenon becomes more remarkable in a high-porosity structure after the pore former burns down.

To solve the problem, in the present invention, a material which functions as the reinforcing agent even after the binder burns down is separately added to the clay for use in the forming. Concretely, the clay (formable material) for use in the forming contains colloidal particles such as silica sol. Since the colloidal particles harden by dehydration condensation reaction or the like at a comparatively low temperature, the particles function as the reinforcing agent even after the binder burns down, and the drop of the mechanical strength of the formed body (furthermore the porous honeycomb structure) can be prevented. Therefore, a situation in which the porous honeycomb structure is cracked can be effectively prevented even in a case where a large amount of binder and pore former burn and generate heat, accordingly the temperature of the formed body being fired rapidly rises, and a large thermal stress is generated. A situation in which the porous honeycomb structure collapses by its own weight can be effectively prevented even in the high-porosity structure after the pore former has burnt down.

### ① First Step (Preparation of Clay)

In the manufacturing method of the present invention, first, at least an aggregate particle material formed of a ceramic and/or a metal, water, an organic binder, a pore former, and colloidal particles are mixed and kneaded to thereby form clay.

Aggregate particles are particles which constitute main constituting components of a porous honeycomb structure (sintered body), and the aggregate particle material is a raw material substance. The aggregate particle material in the present invention contains at least one type of component selected from mullite, alumina, aluminum titanate, lithium aluminum silicate, silicon carbide, silicon nitride, and metal silicon, and a total of the mass of the component occupies 50% by mass or more with respect to a total mass of the aggregate particle material. This is beneficial from a viewpoint of enhancing resistance to heat.

Metal silicon is not a ceramic, but is sometimes a constituting material of an Si-SiC sintered body in which silicon carbide and metal silicon are the aggregate particle materials.

The organic binder is an additive which is gelled in the formed body (clay) before fired and which performs a function of a reinforcing agent to maintain the mechanical strength of the formed body. Therefore, as the binder, organic polymers capable of being gelled in the formed body (clay) are preferably usable such as hydroxypropoxyl methyl cellulose, hydroxypropyl methyl cellulose, methyl cellulose, hydroxyethyl cellulose, carboxyl methyl cellulose, and polyvinyl alcohol.

The pore former is an additive which burns down during the firing of the formed body and which forms pores to thereby increase porosity, so that a high-porosity porous honeycomb structure is obtained. Therefore, examples of the pore former include organic materials which burn down during the firing of the formed body, such as graphite, flour, starch, phenol resin, polymethyl methacrylate, polyethylene, and polyethylene terephthalate. Above all, a microcapsule (acrylic resin-based microcapsule, etc.) formed of a foam resin is especially preferably usable. Since the microcapsule formed of the foam resin is hollow, a high-porosity porous honeycomb structure can be obtained by a small amount of added microcapsule. Additionally, there is an advantage that little heat is generated at a firing time, and generation of thermal stress can be reduced.

The colloidal particles are additives which harden by dehydration condensation reaction or the like at a comparatively low temperature and which function as the reinforcing agent to bind aggregate particles to one another even after the binder burns down. Examples of the colloidal particles include colloidal particles formed of an inorganic material which does not burn down during the firing of the formed body, such as silica sol, alumina sol, metal alkoxide, and water glass. The colloidal particles whose hardening temperature is low as compared with burning temperature of the binder or the pore former for use are preferably selected from these colloidal particles and used. The added amount and composition of the colloidal particles to be added are preferably selected, and used as a part of a starting material in such a manner as to be adapted to a target sintered body composition.

As a content of the colloidal particles, the clay for use in the forming contains 0.1 to 10 parts by mass of the colloidal particles with respect to 100 parts by mass of the aggregate particle material, more preferably contains 0.2 to 5.0 parts by mass of colloidal particles, and especially preferably contains 0.4 to 2.0 parts by mass of colloidal particles.

When the content of the colloidal particles is set in the above-described range, in calcining and firing steps, the obtained calcined body has a strength of at least 0.01 kg/cm² or more, and a situation in which the calcined body (furthermore the porous honeycomb structure) is cracked or collapsed by its own weight can be effectively prevented (it is to be noted that a method of measuring the above-described strength will be described in detail in paragraphs of examples). On the other hand, when the content of the colloidal particles is less than the above-described range, the content is unfavorable in that the effect of maintaining the mechanical strength of the calcined body is insufficient after the burn-down of the binder. When the content exceeds the above-described range, the content is unfavorable in that the effect of maintaining the mechanical strength of the calcined body is fulfilled, but the colloidal particles fill in the pores of the calcined body (furthermore the porous honeycomb structure), and the porosity drops.

The clay in the present invention needs to contain at least the aggregate particle material, water, organic binder, pore former, and colloidal particles. When the aggregate particle material contains silicon (cordierite material, mullite, lithium aluminum silicate, silicon carbide, silicon nitride, metal silicon, etc.), an alkali metal source is preferably contained. The alkali metal source forms hydroxide when dissolved in a water content in the clay, and reacts with silica unavoidably present on the surface of the silicon-containing aggregate particle material to form alkali silicate glass (water glass) (see the following reaction formula (1)). This alkali silicate glass functions as the reinforcing agent even after the binder burns down, and the drop of the mechanical strength of the formed body (furthermore the porous honeycomb structure) can be prevented.

2KOH+SiO₂ → K₂O•SiO₂+H₂O (1)

The alkali metal source is not especially limited as long as the material is capable of reacting with water to thereby discharge alkali metal ions, and examples thereof include inorganic salts of alkali metals, such as oxide and hydroxide, and organic salts of alkali metals, such as fatty acid salt. The type of the alkali metal is not especially limited, but potassium and sodium are preferable.

As the content of the above-described alkali metal source, the clay for use in the forming preferably contains an alkali metal source corresponding to 0.01 to 10 parts by mass of a alkali metal in terms of the alkali metal with respect to 100 parts by mass of the aggregate particle material, more preferably contains the alkali metal source corresponding to 0.02 to 5 parts by mass, and especially preferably contains the alkali metal source corresponding to 0.03 to 1 part by mass.

The above-described clay may contain another additive if necessary. For example, a dispersant (surfactant) or the like for promoting dispersion into water which is a dispersion medium may be contained. Examples of the dispersant include ethylene glycol, dextrin, fatty acid soap, polyalcohol and the like.

The above-described aggregate particle material, water, organic binder, pore former, colloidal particles and the like are mixed and kneaded, for example, by a vacuum kneading machine to thereby prepare clay having an appropriate viscosity.

### ② Second Step (Forming and Drying)

Next, the clay prepared as described above is formed into a honeycomb shape having a plurality of cells constituting through channels of fluids, and dried to thereby obtain a honeycomb formed body.

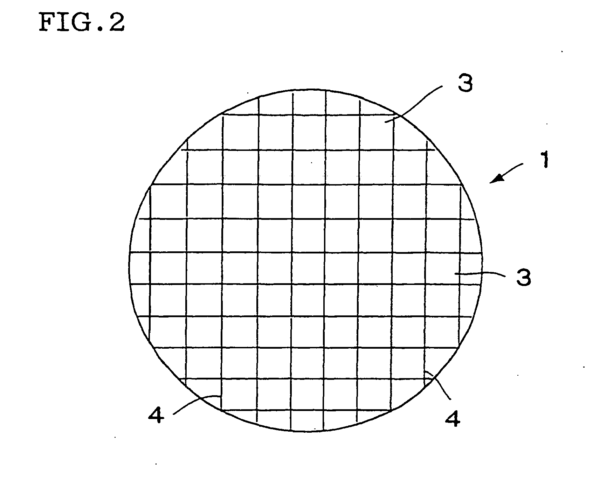

The "honeycomb shape" mentioned in the present description means a shape, for example, of a porous honeycomb structure 1 shown in FIG. 2, which is partitioned by remarkably thin partition walls 4 to thereby form a plurality of cells 3 constituting the through channels of the fluids. A whole shape of the honeycomb formed body is not especially limited, and examples of the shape include not only a cylindrical shape shown in FIG. 2 but also a quadratic prism shape and a triangular prism shape. A cell shape (cell shape in a section vertical to a cell forming direction) of the honeycomb formed body is not especially limited, and examples include shapes of not only a quadrangular cell shown in FIG. 2 but also a hexagonal cell and a triangular cell.

A forming method is not especially limited, known forming methods such as extrusion forming, injection forming, and press forming have heretofore been usable, and above all a method is preferably usable in which the clay prepared as described above is extruded using a die having a desired cell shape, partition wall thickness, and cell density. A drying method is not especially limited, known drying methods such as hot air drying, microwave drying, dielectric drying, reduced-pressure drying, vacuum drying, and freezing drying have heretofore been usable, and above all a drying method obtained by combining the hot air drying and the microwave drying or the dielectric drying is preferable in that the whole formed body can be quickly and uniformly dried.

The honeycomb formed body of the present invention obtained as described above comprises the clay containing at least the aggregate particle material formed of a ceramic and/or a metal, water, organic binder, pore former, and colloidal particles, and the honeycomb formed body is formed into the honeycomb shape having a plurality of cells constituting the through channels of fluids. The honeycomb formed body fulfils an effect of being capable of effectively preventing a situation in which the porous honeycomb structure is cracked or collapsed by its own weight in firing the formed body. Especially when the clay contains 0.1 to 10 parts by mass of colloidal particles with respect to 100 parts by mass of the aggregate particle material, the effect becomes greater.

### ③ Third Step (Calcining)

Furthermore, the honeycomb formed body obtained as described above is calcined (degreased) to thereby form a calcined body. The calcining means an operation to burn and remove organic materials (binder, pore former, dispersant, etc.) in the formed body, and the hardening by the dehydration condensation reaction or the like of the colloidal particles is also simultaneously performed in the manufacturing method of the present invention. In general, since the burning temperature of the binder is about 160°C, and that of the pore former is about 300°C, a calcining temperature may be set to about 200 to 1000°C. A calcining time is not especially limited, but is usually about 1 to 10 hours.

### ④ Fourth Step (Firing)

Finally, the calcined body obtained as described above is fired to thereby obtain a porous honeycomb structure. The firing is an operation for sintering and densifying the aggregate particle material in the calcined body to secure a predetermined strength. Since firing conditions (temperature and time) differ with the type of the aggregate particle material, appropriate conditions may be selected in accordance with the type of the aggregate particle material for use. For example, when the cordierite material is used as the aggregate particle material, the body is preferably fired at a temperature of 1410 to 1440°C for 3 to 7 hours.

### (Examples)

The present invention will be further concretely described in accordance with examples in which high-porosity porous honeycomb structures having a porosity of 60% were manufactured, and comparative examples. Additionally, there is not any limitation to the present invention by these examples. It is to be noted that with regard to average particle diameters of aggregate particle materials in the following examples and comparative examples, a value of 50% particle diameter was used which was measured by an X-ray transmission system grain size distribution measuring device (e.g., Sedigraph 5000-02 type manufactured by Shimadzu Corp.) using a Stokes' liquid-phase precipitation method as a measurement principle and performing detection by an X-ray transmission method.

### [Manufacturing of Honeycomb Formed Body]

### (Example 1)

As an aggregate particle material, a total of 100 parts by mass including 80 parts by mass of silicon carbide powder having an average particle diameter of 33.0 µm, and 20 parts by mass of metal silicon powder having an average particle diameter of 4.0 µm were prepared. Moreover, with respect to 100 parts by mass of this aggregate particle material, 1.2 parts by mass (in terms of solid content) of silica sol which was colloidal particles, and 0.3 parts by mass of potassium laurate which was an alkali metal source were added. Furthermore, methyl cellulose and hydroxypropyl methyl cellulose which were organic binders, starch which was a pore former, and an appropriate amount of water were added, and mixed and kneaded by a vacuum kneading machine to prepare clay.

The above-described clay was formed into a honeycomb shape by extruding the clay using a die having a cell shape, partition wall thickness, and cell density described later, and thereafter dried by a drying method obtained by combining hot air drying and microwave drying to obtain a honeycomb formed body. As to a whole shape of the obtained honeycomb formed body, an end-face (cell opening surface) shape was a 35 mm × 35 mm square, a length was 152 mm, a cell shape was an about 1.15 mm × 1.15 mm square cell, the thickness of the partition wall was 310 µm, the cell density was about 46.5 cells/cm² (300 cells/square inch), and a total cell number was 576 cells.

### (Examples 2, 3)

A honeycomb formed body was obtained in the same manner as in Example 1 except that an added amount of colloidal particles was set to 0.1 parts by mass (Example 2), and 10.0 parts by mass (Example 3).

### (Example 4)

As an aggregate particle material, a total of 100 parts by mass including 98 parts by mass of alumina powder having an average particle diameter of 6.0 µm, and 2 parts by mass of silica powder having an average particle diameter of 5.0 µm were prepared. Moreover, with respect to 100 parts by mass of this aggregate particle material, 1.5 parts by mass (in terms of solid content) of alumina sol which was colloidal particles were added. Furthermore, methyl cellulose and hydroxypropyl methyl cellulose which were organic binders, starch which was a pore former, ethylene glycol which was a dispersant (surfactant), and an appropriate amount of water were added, and mixed and kneaded by a vacuum kneading machine to prepare clay.

The above-described clay was formed into a honeycomb shape by extruding the clay using a die having a cell shape, partition wall thickness, and cell density described later, and thereafter dried by a drying method obtained by combining hot air drying and dielectric drying to obtain a honeycomb formed body. As to a whole shape of the obtained honeycomb formed body, an end-face (cell opening surface) shape was a 50 mm × 50 mm square, a length was 50 mm, a cell shape was an about 2.1 mm × 2.1 mm square cell, the thickness of the partition wall was 440 µm, the cell density was about 15.5 cells/cm² (100 cells/square inch), and a total cell number was 400 cells.

### (Comparative Example 1)

A honeycomb formed body was obtained in the same manner as in Example 1 except that any colloidal particle or alkali metal source was not added.

### (Comparative Example 2)

A honeycomb formed body was obtained in the same manner as in Example 1 except that an added amount of colloidal particles was set to 15.0 parts by mass.

### [Calcining]

The honeycomb formed bodies of Examples 1 to 4 and Comparative Examples 1 and 2 described above were calcined (degreased) at about 400°C in the atmosphere for five hours to thereby obtain calcined bodies.

### [Firing]

The calcined bodies of Examples 1 to 3 and Comparative Examples 1 and 2 described above were fired at about 1450°C in an argon atmosphere for two hours to thereby obtain porous honeycomb structures. The calcined body of Example 4 was fired at about 1650°C in the atmosphere for two hours to thereby obtain a porous honeycomb structure.

### [Evaluation]

With regard to the calcined bodies and the porous honeycomb structures of Examples 1 to 4 and Comparative Examples 1 and 2 described above, ① strength of the calcined body, ② state of the calcined body, and ③ porosity of the porous honeycomb structure were evaluated by the following method.

### ① Strength of Calcined Body

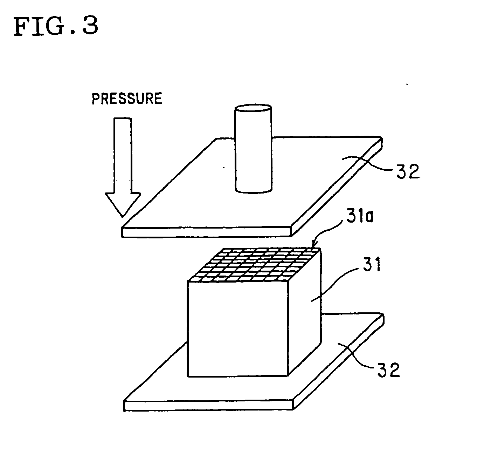

The strength was measured in conformity to "Compressive Strength Test Method of Fine Ceramics" described in JIS R 1608". Concretely, first, cubic bodies of honeycomb structures of the respective examples and comparative examples having the same cell shape, partition wall thickness, and cell density and having one side of 35 mm were extruded using the clays prepared in Examples 1 to 4 and Comparative Examples 1 and 2, and were dried and calcined by the same drying and calcining methods to prepare test pieces. Subsequently, as shown in FIG. 3, a pressure was applied to a test piece 31 toward a forming direction of cells 31a by pressurizing plates 32, and compressive strengths were measured to thereby evaluate the strengths of the calcined bodies. It is to be noted that the compressive strength was calculated by assuming that the cubic body of the honeycomb structure was a solid body, and dividing a maximum load by 35x35 (mm²). Results are shown in Table 1.

### ② State of Calcined Body

Presence of generation of crack in the calcined body, and presence of collapse of the calcined body by its own weight were visually observed to thereby evaluate a state of the calcined body. Results are shown in Table 1.

### ③ Porosity of Porous Honeycomb Structure

A porosity of the porous honeycomb structure was measured by mercury porosimetry to thereby evaluate the porosity of the porous honeycomb structure. Results are shown in Table 1.

**(Table 1)**

| | Aggregate particle material | Colloidal particle | | Strength of calcined body (kg/cm²) | State of calcined body | Porosity of porous honeycomb structure (%) |
|---|---|---|---|---|---|---|
| | | Type | Amount (parts by mass) | | | |
| Ex. 1 | Silicon carbide/metal silicon (80:20) | Silica Sol | 1.2 | 0.1 | No crack• collapse | 60 |
| Ex. 2 | Silicon carbide/metal silicon (80:20) | Silica Sol | 0.1 | 0.01 | No crack• collapse | 60 |
| Ex. 3 | Silicon carbide/metal silicon (80:20) | Silica Sol | 10 | 8 | No crack• collapse | 58 |
| Ex. 4 | Alumina/silica (98:2) | Alumina Sol | 1.5 | 0.5 | No crack• collapse | 60 |
| C.E.1 | Silicon carbide/metal silicon (80:20) | | | 0.005 | Collapse | 60 |
| C.E.2 | Silicon carbide/metal silicon (80:20) | Silica Sol | 15 | 20 | No crack• collapse | 40 |

### [Results]

The calcined bodies of Examples 1 to 4 had a strength of at least 0.01 kg/cm² or more, and the strength was remarkably enhanced as compared with the calcined body of Comparative Example 1. The generation of the crack or the collapse by the weight was not recognized in any of the calcined bodies of Examples 1 to 4. Furthermore, the porous honeycomb structures of Examples 1 to 4 maintained the porosity equal to that of the porous honeycomb structure of Comparative Example 1, and any drop of the porosity was not recognized.

On the other hand, the calcined body of Comparative Example 1 had a strength of only 0.005 kg/cm², and the strength was remarkably low. It was not possible to prevent the collapse by the weight in the calcined body of Comparative Example 1.

Moreover, the calcined body of Comparative Example 2 had a strength of 20.0 kg/cm², the strength was remarkably enhanced as compared with the calcined body of Comparative Example 1, the generation of the crack or the collapse of the weight was not recognized, but the porosity of the porous honeycomb structure of Comparative Example 2 largely dropped as compared with the porous honeycomb structure of Comparative Example 1. That is, it was not possible to obtain the porous honeycomb structure having a targeted high porosity (porosity of 60%).

### Industrial Applicability

As described above, since colloidal particles are contained in clay for use in the forming in a method of manufacturing a porous honeycomb structure of the present invention, it is possible to effectively prevent a situation in which the porous honeycomb structure is cracked or collapsed by its own weight during the firing of a formed body.

## Claims

1. A method of manufacturing a porous honeycomb structure, comprising the steps of: mixing and kneading at least an aggregate particle material composed of a ceramic and/or a metal, water, an organic binder, a pore former, and colloidal particles to form a formable material; forming the formable material into a honeycomb shape having a plurality of cells constituting through channels of fluids; drying the formable material to obtain a honeycomb formed body; calcining the honeycomb formed body to form a calcined body; and thereafter firing the calcined body to obtain the porous honeycomb structure;
wherein the formable material contains 0.1 to 10 parts by mass of the colloidal particles with respect to 100 parts by mass of the aggregate particle material, and
the aggregate particle material contains at least one type of component selected from
mullite,
alumina,
aluminum titanate,
lithium aluminum silicate,
silicon carbide,
silicon nitride and
metal silicon,
and the total of the mass of the component occupies 50% by mass or more with respect to the total mass of the aggregate particle material.

2. The method of manufacturing the porous honeycomb structure according to claim 1, wherein the formable material contains an alkali metal source corresponding to 0.01 to 10 parts by mass of an alkali metal in terms of the alkali metal with respect to 100 parts by mass of the aggregate particle material.

3. A honeycomb formed body comprising a formable material formed into a honeycomb shape having a plurality of cells constituting through channels of fluids, the formable material containing at least an aggregate particle material composed of a ceramic and/or a metal, water, an organic binder, a pore former, and colloidal particles;
wherein the formable material contains 0.1 to 10 parts by mass of the colloidal particles with respect to 100 parts by mass of the aggregate particle material; and
the aggregate particle material contains at least one type of component selected from
mullite,
alumina,
aluminum titanate,
lithium aluminum silicate,
silicon carbide,
silicon nitride and
metal silicon,
and the total of the mass of the component occupies 50% by mass or more with respect to the total mass of the aggregate particle material.

4. The honeycomb formed body according to claim 1 or 3, wherein the formable material contains an alkali metal source corresponding to 0.01 to 10 parts by mass of an alkali metal in terms of the alkali metal with respect to 100 parts by mass of the aggregate particle material.

## Patentansprüche

1. Verfahren zur Herstellung einer porösen Wabenstruktur, umfassend folgende Schritte: Mischen und Kneten zumindest eines aggregierten teilchenförmigen Materials aus einem Keramikmaterial und/oder einem Metall, Wasser, eines organischen Bindemittels, eines Porenbildners und kolloidaler Teilchen zur Ausbildung eines formbaren Materials; Formen des formbaren Materials in eine Wabenform mit einer Vielzahl von Zellen, die Durchgangskanäle für Fluide bilden; Trocknen des formbaren Materials zum Erhalt eines Wabenformkörpers; Kalzinieren des Wabenformkörpers zur Ausbildung eines kalzinierten Körpers und anschließendes Brennen des kalzinierten Körpers zum Erhalt der porösen Wabenstruktur;
worin das formbare Material 0,1 bis 10 Gewichtsteile der kolloidalen Teilchen in Bezug auf 100 Gewichtsteile des aggregierten teilchenförmigen Materials enthält und das aggregierte teilchenförmige Material zumindest eine aus folgenden ausgewählte Komponente enthält:
Mullit,
Aluminiumoxid,
Aluminiumtitanat,
Lithiumaluminiumsilicat,
Siliciumcarbid,
Siliciumnitrid und
metallisches Silicium;
und die Gesamtmasse der Komponente bezogen auf die Gesamtmasse des aggregierten teilchenförmigen Materials 50 Gew.-% oder mehr beträgt.

2. Verfahren zur Herstellung der porösen Wabenstruktur nach Anspruch 1, worin das formbare Material eine Alkalimetallquelle enthält, die 0,01 bis 10 Gewichtsteilen eines Alkalimetalls bezogen auf das Alkalimetall bezogen auf 100 Gewichtsteile des aggregierten teilchenförmigen Materials entspricht.

3. Wabenformkörper, umfassend ein formbares Material, das in Wabenform gebracht wird mit einer Vielzahl an Zellen, die Durchgangskanäle für Fluide bilden, wobei das formbare Material zumindest ein aggregiertes teilchenförmiges Material aus einem Keramikmaterial und/oder einem Metall, Wasser, ein organisches Bindemittel, einen Porenbildner und kolloidale Teilchen enthält;
worin das formbare Material 0,1 bis 10 Gewichtsteile der kolloidalen Teilchen bezogen auf 100 Gewichtsteile des aggregierten teilchenförmigen Materials enthält und das aggregierte teilchenförmige Material zumindest eine aus folgenden ausgewählte Komponente enthält:
Mullit,
Aluminiumoxid,
Aluminiumtitanat,
Lithiumaluminiumsilicat,
Siliciumcarbid,
Siliciumnitrid und
metallisches Silicium;
und die Gesamtmasse der Komponente bezogen auf die Gesamtmasse des aggregierten teilchenförmigen Materials 50 Gew.-% oder mehr beträgt.

4. Wabenformkörper nach Anspruch 1 oder 3, worin das formbare Material eine Alkalimetallquelle enthält, die 0,01 bis 10 Gewichtsteilen eines Alkalimetalls bezogen auf das Alkalimetall bezogen auf 100 Gewichtsteile des aggregierten teilchenförmigen Materials entspricht.

## Revendications

1. Procédé de fabrication d'une structure poreuse en nid d'abeilles, comprenant les étapes de: mélanger et malaxer au moins un matériau de particules d'agrégat constitué d'une céramique et/ou d'un métal, d'eau, d'un liant organique, d'un formeur de pores et de particules colloïdales pour former un matériau formable; former le matériau formable en une forme de nid d'abeilles ayant une pluralité d'alvéoles constituant des canaux traversants de fluides; sécher le matériau formable pour obtenir un corps formé en nid d'abeilles; calciner le corps formé en nid d'abeilles pour former le corps calciné; et ensuite cuire le corps calciné pour obtenir la structure poreuse en nid d'abeilles;
où le matériau formable contient 0,1 à 10 parties en masse des particules colloïdales par rapport à 100 parties en masse du matériau de particules d'agrégat, et
le matériau de particules d'agrégat contient au moins un type de composant sélectionné parmi
mullite,
alumine,
aluminium titanate,
lithium aluminium silicate,
carbure de silicium,
nitrure de silicium et
silicium métallique,
et le total de la masse du composant représente 50% en masse ou plus par rapport à la masse totale du matériau de particules d'agrégat.

2. Procédé de fabrication de la structure poreuse en nid d'abeilles selon la revendication 1, dans lequel le matériau formable contient une source de métal alcalin correspondant à 0,01 à 10 parties en masse d'un métal alcalin en termes du métal alcalin par rapport à 100 parties en masse du matériau de particules d'agrégat.

3. Corps formé en nid d'abeilles comprenant un matériau formable formé en une forme de nid d'abeilles ayant une pluralité d'alvéoles constituant des canaux traversants de fluides, le matériau formable contenant au moins un matériau de particules d'agrégat constituée d'une céramique et/ou d'un métal, d'eau, d'un liant organique, d'un formeur de pores et de particules colloïdales;
où le matériau formable contient 0,1 à 10 parties en masse des particules colloïdales par rapport à 100 parties en masse du matériau de particules d'agrégat; et
le matériau de particules d'agrégat contient au moins un type de composant sélectionné parmi
mullite,
alumine,
aluminium titanate,
lithium aluminium silicate,
carbure de silicium,
nitrure de silicium et
silicium métallique,
et le total de la masse du composant représente 50% en masse ou plus par rapport à la masse totale du matériau de particules d'agrégat.

4. Corps formé en nid d'abeilles selon la revendication 1 ou 3, dans lequel le matériau formable contient une source de métal alcalin correspondant à 0,01 à 10 parties en masse d'un métal alcalin en termes du métal alcalin par rapport à 100 parties en masse du matériau de particules d'agrégat.
